# EUROPEAN PATENT APPLICATION

(11) **EP 4 744 491 A1**
(43) Date of publication of application: **20.05.2026**
(21) Application number: 24213917.8
(22) Date of filing: 19.11.2024
(51) Int. Cl.: A21D 2/38, A21D 8/04, A21D 10/00, A21D 13/02, A21D 13/06, A23L 7/104, A23L 7/10

(54) **DRY SOURDOUGH COMPOSITION AND METHOD OF MAKING SAID**

(71) Applicant: Circular Food Technology ApS, 1112 København K (DK)
(72) Inventor: Verlinde, Anna, 1112 København K (DK); Brandi, Moe, 1112 København K (DK); Riemann-Andersen, Aviaja Bondo, 1112 København K (DK); Signes, Oriol del Teso, 1112 København K (DK)
(74) Representative: Plougmann Vingtoft a/s

(57) **Abstract**

The present invention relates to a dry sourdough composition and a method of making the dry sourdough composition. In particular, the present invention relates to a dry sourdough composition comprising dried and milled spent grains, wheat flour, one or more acid producing bacteria and one or more yeasts. Furthermore, the present invention relates to a method of making a dry sourdough composition comprising fermentation of a slurry of dried and milled spent grain, wheat flour, water, acid producing bacteria and yeast, followed by drying of the fermented slurry.

## Description

### Technical field of the invention

The present invention relates to a dry sourdough composition and a method of making the dry sourdough composition. In particular, the present invention relates to a dry sourdough composition comprising dried and milled spent grains, wheat flour, one or more acid producing bacteria and one or more yeasts. Furthermore, the present invention relates to a method of making a dry sourdough composition comprising fermentation of a slurry of dried and milled spent grain, wheat flour, water, acid producing bacteria and yeast, followed by drying of the fermented slurry.

### Background of the invention

Bread and other bakery products are staple foods forming an essential part of many diets across the globe. Wheat flour is one of the primary ingredients in most bakery products, making it one of the most widely traded commodities worldwide. However, traditional refining processes used in producing wheat flour strip away many of the grain's inherent nutrients, particularly fiber, vitamins, and minerals. Over the years, awareness on the deletion of these essential nutrients has been growing. Refined flour, which lacks the nutritional value found in whole grains, has been associated with health impacts.

In response to these concerns, consumer demand for healthier bakery options has significantly increased in recent years. There is an increasing demand for products that are not only nutritious but also high in dietary fiber, a component widely recognized for its beneficial impact on the digestive health, blood sugar regulation, and cardiovascular health. This shift in consumer preference aligns with the encouragement from government health organisations worldwide, which are actively promoting higher fiber intake to address public health concerns. Research has shown that an adequate fiber intake can reduce the risk of various chronic diseases, making it a priority for health guideline in many countries. However, enhancing the fiber content in bakery products is not without challenges. The inclusion of higher fiber levels often leads to undesirable changes in texture and mouthfeel, which can make products less appealing to consumers. Fiber-rich products may have a denser, drier texture that lacks the softness and lightness typically associated with popular bakery items.

Hence, a composition for making bakery products having a high fiber content but being light and soft in texture would be advantageous, and in particular a composition having a balance between health benefits and sensory qualities, such as aroma and texture, would be advantageous.

### Summary of the invention

Thus, an object of the present invention relates to providing a composition for making bakery products that have a high content of fiber while having a texture and softness similar to non-fiber bakery products.

In particular, it is an object of the present invention to provide a composition for making bakery products that solves the above mentioned problems of the prior art with fiber-rich bakery products being dense, dry and lacking softness and lightness.

To overcome the challenges of making bakery products with a high fiber content, the inventors of the present invention surprisingly have found that a dry sourdough composition can be made comprising spent grains, wheat flour, and acid producing bacteria and yeasts that results in the same softness and texture as non-fiber compositions.

The inventors have found an innovative fermentation process that utilizes fermentation of mixtures comprising spent grains using acid producing bacteria and yeasts. This fermentation process not only results in an improved texture of baked products, but also makes the products more palatable, and enhances the aroma and flavour profile. Additionally, in the method of the invention, metabolic byproducts produced by acid producing bacteria and yeasts during fermentation contributes to a more desirable and complex aroma, creating an end product (dry sourdough composition) that satisfies both health-focused consumers and traditionally bakery enthusiasts.

Hence, the dry sourdough composition of the present invention meets the growing demand for nutritious and delicious high-fiber bakery products.

The present invention is a specialized composition in the form of a shelf-stable dry sourdough composition that is suitable to be incorporated into a range of bakery formulations. Further, the present invention gives the distinct flavour and acidity associated with sourdough to each bakery product while remining easy to store and incorporate into recipes. The dry sourdough composition of the present invention can be added as an ingredient during the preparation of various baked products, resulting in enhanced sensory quality and enhanced aroma, without impairing texture and taste. The present invention therefore provides an efficient way for bakeries to enrich their products with a rich, sourdough-like aroma and taste without the complexity of live sourdough maintenance, and then adding value to the industry of baked products. In addition, the present invention allows increasing the fiber content in baked products without compromising the texture of the baked products.

Thus, one aspect of the invention relates to a dry sourdough composition having a moisture content in the range of from 3% to 11% by weight, and comprising:
i) dried and milled spent grain in an amount in the range of 15% to 75% by weight;
ii) wheat flour in an amount in the range of 25% to 85% by weight;
iii) one or more acid producing bacteria(s)
iv) one or more yeast(s).

Another aspect of the present invention relates to a method of producing a dry sourdough composition comprising
a) mixing the following ingredients into a slurry:
   i) dried and milled spent grain in an amount in the range of 7.5% to 37.5% by weight of the slurry,
   ii) wheat flour in an amount in the range of 12.5% to 42.5% by weight of the slurry,
   iii) one or more acid producing bacteria and one or more yeast,
   iv) water in an amount of 50% to 70% by weight of the slurry, and
b) fermenting the slurry for at least 5 hours to obtain a fermented slurry,
c) drying the fermented slurry until the obtained dry sourdough composition has a moisture content in the range of 3% to 11% by weight.

Yet another aspect of the present invention relates to the use of the dry sourdough composition according to the invention in baked products selected from the group consisting of baked bread, soft rolls, sweet buns, pasta, pastry, crackers, bread sticks, cookies, biscuits, scones, pancakes, waffles, and muffins.

### Brief description of the figures

Figure 1 shows baked bread made of dry sourdough compositions having different amounts of spent grains and wheat flour. Figure 1A shows a bread made of dry sourdough comprising 10% spent grain and 90% wheat flour, figure 1B shows a bread made of dry sourdough comprising 20% spent grain and 80% wheat flour, figure 1C shows a bread made of dry sourdough comprising 40% spent grain and 60% wheat flour, figure 1B shows a bread made of dry sourdough comprising 60% spent grain and 40% wheat flour.
Figure 2 shows the sensory profile of three different types of dry sourdough composition.

The present invention will now be described in more detail in the following.

### Detailed description of the invention

### Definitions

Prior to discussing the present invention in further details, the following terms and conventions will first be defined:
Unless defined otherwise, all technical and scientific terms used herein have the same meaning as commonly understood by one of ordinary skill in the art.

The term "spent grain" refers to a by-product obtained from the process of brewing beer or distilling liquor from grains, rice and corns, i.e. from brewing beer or from whiskey distillation. However, spent grains may also come from the preparation of other types of liquor where grains, corn, rice or sugar canes is used as the starting material for preparing the liquor. An example is distillation of vodka from cereal grains that have been fermented. Other examples are distillation of rum from fermented sugar canes or arrack from sugar canes or rice. The spent grain obtained from for example brewing beer is the insoluble solids obtained after malting and mashing in the brewing process.

The spent grain refers to partially processed grains, i.e. the grains have partially been used in another process, but may still be used for other types of products, i.e. can be used in the dry sourdough composition.

The spent grains obtained from brewing beer is typically referred to as brewer's spent grain (BSG) or beer bagasse.

Brewer's spent grain is a non-flowing product having a consistence similar to cooked oatmeal or wettened sawdust and may be referred to as a grain bed. Brewing beer requires only a few ingredients and can typically be divided into four steps or phases, namely the malting step, the mashing step, the fermentation step and the post-fermentation step. However, the malting step can be excluded if there is a need for reduction of expenses. Whiskey distillation also involves malting and mashing.

During malting in beer brewing, the barley grains are soaked in water and hence allowed to germinate or sprout until a certain point which allows development of a wide range of enzymes (malting enzymes). The enzymes developed are amylases, proteases, and other enzymes. These enzymes will modify the structure of the barley endosperm by breaking down the cell walls and the protein matrix. After germination and sprouting of the barley grains, barley grains are subjected to a kilning step that stops the germination and development of enzymes. The kilning step most often includes heat treatment. The kilning process provides roasting of the barley grains.

During the mashing step, the enzymes are released and used for hydrolysis of large macromolecules such as starch and protein. In the mashing step, the malted barley is milled and mixed with water and followed by a step-wise heating in order to break down starch and proteins into subunits that will function as substrate in the following fermentation process. It is believed that the flavouring ingredients are intensified during the malting and mashing process. The step-wise heating is because the different enzymes synthesized during the malting step have optimal activity at different temperatures. At the end of the mashing step, a heat treatment is provided to inactivate the enzymes. Before fermentation, the solids from the mash is removed by filtration to obtain a mash liquid which is called the wort. The wort is used for the fermentation process in the beer production, where the solids removed is known as brewer's spent grain.

Brewer's spent grain (BSG) is thus the insoluble leftover obtained after wort production during brewing of beer. Similarly, other spent grains are the insoluble leftover obtained from for example liquor distillation. BSG comprises grain solids, proteins, carbohydrates, and other materials, where the main solid components of BSG is the husk pericarp and seed coat of the malt, which are rich sources of lignin, cellulose, hemicellulose, lipids and protein. Of these components cellulose, hemicellulose and lignin comprises almost 50% of the dry matter content. The BSG also comprises a high amount of water. In BSG approximately 80% by weight is water, where approximately 20% by weight is solid materials. The water content in BSG comprises about 15% by weight free water, where the remaining water (about 85% by weight) is sucked into the grain material and thus not free flowing. In the present invention, BSG obtained after removal of the wort is termed as "raw BSG".

Raw BSG is a great source of protein and fibre. Raw BSG may comprise a content of proteins in the range of 15-25% by weight of dry matter. Raw BSG also comprises a high amount of dietary fibre, such as about 40-60% by weight of dry matter content.

### Dry sour dough of the invention:

An aspect of the present invention relates to providing a dry sourdough composition having a moisture content in the range of from 3% to 11% by weight, and comprising:
i) dried and milled spent grain in an amount in the range of 15% to 75% by weight;
ii) wheat flour in an amount in the range of 25% to 85% by weight;
iii) one or more acid producing bacteria(s)
iv) one or more yeast(s).

Traditionally, sourdough is defined as a mixture of flour and water that undergoes spontaneous fermentation by naturally occurring lactic and acetic acid bacteria and yeasts. This natural fermentation provides two primarily functions, i.e. it acidifies the dough which impact flavour and shelf-life and it leavens, or raises, the dough, resulting in the desired texture and volume in baked goods.

In the present invention, a dry sourdough composition is provided comprising spent grains.

The term "sourdough" refers in the context of the present invention to a composition that has been subjected to fermentation with acid producing bacteria and yeasts to obtain the taste and flavour of a sourdough. This fermentation process gives the characteristic tangy flavor of a sourdough.

Further, in the present invention, the sourdough composition is dry and has a moisture content in the range of 3% to 11% by weight. Therefore, the dry sourdough composition of the present invention is not to leaven the baked products. On the contrary, the dry sourdough composition of the present invention provides the possibility of increasing the fiber content of baked products while obtaining a baked product with good texture, softness and palatability. Further, when using the dry sourdough composition of the present invention in making baked products, it is necessary to add additional (bakers)yeast in order to make the baked product rise.

The dry sourdough composition of the present invention provides acidity and release of unique aroma compounds through the fermentation process, enhancing the aroma of the final baked product where the dry sourdough composition is used.

By using a dry sourdough composition according to the present invention, bakery products can conveniently achieve the characteristic tangy flavour and aroma of traditional sourdough fermentation without the time-consuming and complex maintenance of a live sourdough culture. Furthermore, the dry sourdough composition according to the present invention allows for baked products having an increased fiber content while having a good texture and softness.

The present invention provides a convenient solution for the bakery industry, allowing for the rich flavour and acidic qualities of sourdough and increased fiber content to be used across a wide range of baked products.

The dry sourdough composition of the present invention has a moisture content in the range of 3% to 11% by weight of the dry sour dough composition. The moisture content of the dry sourdough composition should not be above 11% by weight, because then the risk of growing spoiling microorganisms over time increases, and it is desired to make a dry sourdough composition having a long storage time, for example a storage time of at least 6 months, and preferably a storage time over 12 months.

Preferably, the moisture content of the dry sourdough composition is in the range of 4% to 10% by weight.

The dry sourdough composition of the present invention comprises dried and milled spent grains in an amount in the range of 15% to 75% by weight of the total weight of the dry sourdough composition.

In an embodiment of the present invention, the dried and milled spent grains are present in the dry sourdough composition in an amount in the range of from 20% to 65% by weight, preferably in an amount in the range of 30% to 60% by weight and most preferably in an amount in the range of from 40% to 55% by weight.

Raw spent grain obtained from brewing or distilling may comprise a high content of moisture such as up to 80% moisture. Hence, by drying the spent grains before use, some moisture is removed.

Further, the spent grains used in the dry sourdough composition of the present invention is milled. It is important that the spent grains are milled in order to reduce the particle size and make a dry sourdough composition that can be used directly in the baking industry. Further, without being bound by any theory, the inventors of the present invention believe that reducing the particle size of the dried and milled spent grains will improve the fermentation such that it is faster.

The spent grains used in the present invention may be any spent grain that is derived either from brewing or from liquor distilling. However, in an embodiment of the present invention the source of the spent grain is selected from the group consisting of malted and unmalted spent barley, spent oat, spent rye, spent wheat, spent spelt, spent sorghum, spent buckwheat, spent corn, and spent rice. The spent grain may be any of the mentioned ones alone or in combination.

The malted spent barley is corresponding to brewer's spent grain mentioned above.

The dry sourdough composition of the present invention also comprises wheat flour in an amount in the range of from 25% to 85% by weight of the composition. In an embodiment of the present invention, the wheat flour is present in the dry sourdough composition in an amount in the range of from 30% to 75% by weight, preferably in an amount in the range of 35% to 65% by weight and most preferably in an amount in the range of from 40% to 60% by weight.

The wheat flour used in the present invention may be any commercial wheat flour available in the market and the type of wheat flour should not be seen as a limitation of the present invention. The wheat flour could for example a milled flour of *Triticum aestivum.* However, in an embodiment of the present invention, the wheat flour is a high protein wheat flour having a protein content in the range of from 10% to 14% by weight of the wheat four.

The dry sourdough composition according to the present invention also comprises one or more acid producing bacteria(s) and one or more yeasts.

The invention is not limited to any of the specific acid producing bacteria used and in principle heterofermentative bacteria producing both lactic acid and acetic acid can be used. However, in an embodiment of the invention, the one or more acid producing bacteria is/are selected from the group consisting of *Lactobacillus, Streptococcus, Lactococcus, Leuconostoc, Pediococcus, Acetobacter, Thiobacillus* and *Bifidobacteria.*

Preferably, the one or more acid producing bacteria is/are selected from the group consisting of *Lactobacillus, Streptococcus, Lactococcus, and Bifidobacteria.* Most preferably, the one or more acid producing bacteria is a species from the genus of *Lactobacillus.*

Examples of bacteria from the genus of lactobacillus that may be used as the acid producing bacteria is *Lactobacillus acidophilus, Lactobacillus rhamnosus Lactobacillus casei, Lactobacillus plantarum, Lactobacillus brevis, Lactobacillus parabrevis, Lactobacillus diolivorans, Lactobacillus rossiae, Lactobacillus sakei, Lactobaciulllus sanfrandiscensis* and *Lactobacillus delbrueckii.* The bacteria from *Lactobacillus* are lactic acid producing.

*Leuconostoc mesenteroides* is an example of a strain from the *Leuconostoc* genus that can be used.

*Pediococcus cerevisiae* is an example of a strain from the *Pediococcus* genus that can be used. Further examples of *Pediocussus* are *Pediococcus parvulus, Pediocossus damnosus, Pediococcus inopinatus* and *Pediococcus oentosaceus.*

*Streptococcus thermophilus* is an example of a strain from the *Streptococcus* genus that can be used.

*Lactococcus lactis* is an example of a strain from the *Lactococcus* genus that can be used.

*Bifidobacteria* is known for both producing acetic acid and lactic acid. Examples are *Bifidobacterium longum* that is known for producing lactic acid and acetic acid, *Bifidobacterium breve* that produces lactic acid and *Bifidobacterium bifidum* that is another strain that produces lactic acid.

*Acetobacter* produces acetic acid and examples of *Acetobacter* is *Acetobacter malorum, Acetobacter lovaniensis, Acetobacter aceti, Acetobacter pasteurianus, Acetobacter papaya, Acetobacter pomorum* and *Acetobacter fabarum.*

The acid producing bacteria may be derived as either naturally occurring bacteria or added as a starter culture. There will always be some naturally occurring acid producing bacteria present to ferment, but a culture of one or more acid producing bacteria may also be added to give the fermentation process a boost and speed up fermentation.

The dry sourdough composition according to the invention typically comprises acid producing bacteria and yeast in an amount of 10⁵-10¹⁰ CFU per gram of the dry sour dough composition.

In an embodiment of the present invention, the dry sour dough composition comprises one or more yeast(s) that is/are selected from the group consisting of *Saccharomyces, Candida, Kazachstania, Naumovozyma, Pichia* and *Wickerhamomyces.*

For example, the yeast may be *Saccharomyces cerevisiae* that is also known as baker's yeast or brewer's yeast. However, the yeast may also be *Saccharomyces pastorianus* which often is connected to the used of making lager beer. *Saccharomyces pastorianus* is known to ferment at lower temperature than *Saccharomyces cerevisiae.* The yeast may also be *Saccharomyces exiguus* which often are found in sourdough starter culture. Further examples of yeast include *Candida sake, Kazachstania humilis, Kazachstania servazzi, Kazachstania unispora, Naumovozyma castellii, Pichia membranifaciens, Saccharomyces bayanus, Saccharomyces cerevisiae, Wickerhamomyces anomalus.*

Hence, in an embodiment of the invention, the yeast is selected from the group of *Saccharomyces cerevisiae, Saccharomyces pastorianus* and *Saccharomyces exiguus* and combinations thereof.

The yeast may either be naturally occurring yeast, yeast from the environment or yeast from a starter culture. Preferably, yeast is from the environment or from a starter culture.

In a further embodiment of the present invention, the dry sourdough composition comprises yeast wherein the yeast is wild yeast derived on the spent grains and/or from the environment.

The dry sourdough composition typically has a low particle size, and preferably the particle size of the of the dry sourdough composition is 400µm or below, such as 300µm or below and more preferably 200µm or below.

For example, the particle size of the sourdough composition is in the range of 75µm to 400µm, such as 100µm to 300µm.

Further, ingredients can be present in the dry sourdough composition of the present invention. For example, the dry sourdough composition may further comprise an added food grade acid

The term "added food grade acid" refers in the context of the present invention to a food grade acid that has been added when preparing the dry sourdough composition that is different from the acid developed from the fermentation with acid producing bacteria. Hence, the "added food grade acid" is acid in addition to acid produced by the acid producing bacteria. The added food grade acid may result in an improved fermentation and hence flavour development. The added food grade acid improves the environment of the bacteria to grow. The acid may also decrease the activity of unwanted bacteria and hence work as a preservative of the dry sourdough composition.

In an example of the present invention, the added food grade acid is selected from the group consisting of citric acid, lactic acid, acetic acid, malic acid, glucono-delta-lactone, tartaric acid, fumaric acid, gluconic acid.

### Use of the dry sour dough composition:

An aspect of the present invention relates to the use of the dry sourdough composition in making baked products. In general, the dry sourdough composition may be used for preparing any kind of baked product and the dry sourdough composition will be used in addition to the ingredients typically used in preparing baked products.

When using the dry sourdough composition in a baked product, the product obtained will comprise an increased amount of fiber as compared to wheat based products and will have an improved umami taste while having the texture and softness of a typically produced wheat based baked product.

In an embodiment of the invention the dry sourdough composition is used in baked products selected from the group consisting of baked bread, soft rolls, sweet buns, pasta, pastry, crackers, bread sticks, cookies, biscuits, scones, pancakes, waffles, and muffins.

The baked bread may for example be selected from the group of wheat bread, rye bread, specialty bread, gluten free bread, sandwich bread, and pizza flatbread, such as pita and focaccia.

In an embodiment of the present invention, the dry sourdough composition according to the present invention is used in an amount of 2% to 20% of the total amount of ingredients when making a baked product. Preferably, the dry sourdough composition is used in an amount of from 3% to 15% by weight of the total amount of ingredients for making the baked product, more preferably in an amount of 4% to 15% by weight of the total amount of ingredients for making the baked product.

### Method of producing the dry sour dough composition:

A further aspect of the present invention relates to a method of producing a dry sourdough composition comprising
a) mixing the following ingredients into a slurry:
   i) dried and milled spent grain in an amount in the range of 7.5% to 37.5% by weight of the slurry,
   ii) wheat flour in an amount in the range of 12.5% to 42.5% by weight of the slurry,
   iii) one or more acid producing bacteria and one or more yeast,
   iv) water in an amount of 50% to 70% by weight of the slurry, and
b) fermenting the slurry for at least 5 hours to obtain a fermented slurry,
c) drying the fermented slurry until the obtained dry sourdough composition has a moisture content in the range of 3% to 11% by weight.

The dried spent grain is from a source of spent grain selected from the group consisting of malted and unmalted spent barley, spent oat, spent rye, spent wheat, spent spelt, spent sorghum, spent buckwheat, spent corn, and spent rice. The spent grain may be any of the mentioned ones alone or in combination.

It should be understood as all the spent grains may be malted or unmalted.

The dried and milled spent grains may be mixed into the slurry in an amount in the range of 7.5% to 37.5% by weight of the total weight of the slurry. However, in an embodiment of the invention, the dried and milled spent grain is used in the slurry in an amount of 12.5% to 35% by weight, such as 15% to 32.5% by weight, preferably 20% to 30% by weight.

The dried and milled spent grain used in the method of the present invention preferably has a moisture content in the range of 3% to 12% by weight.

The dried spent grains have been milled to reduce the particle size as compared to using raw spent grain. The milling may be into spent grain of various particle size. For example, in an embodiment of the present invention the dried and milled spent grain has a particle size below 800µm, preferably below 600µm and more preferably below 400µm. In a further embodiment of the invention, the dried and milled spent grain has a particle size in the range of 50µm to 800µm. Preferably, the particle size is in the range of 50µm to 400µm, most preferably 100µm to 300µm.

A particle size of the spent grains in the range of 100µm to 800µm results in a dry sourdough composition that can be used directly in making baked products having a good texture. Further, it was found that spent grain having a particle size above 1000µm would result in a composition that is very heterogeneous with noticeable fibres.

The spent grain may be dried by any method known in the art, and the method of drying spent grain is not critical for the present invention, The drying of spent grains may for example be by using spray drying, freeze drying, drum-drying, fluid-bed drying or infrared drying.

In the method of the present invention, wheat flour is used in the slurry in an amount in the range of 12.5% to 42.5% by weight of the slurry. However, in an embodiment of the invention, the wheat flour is used in the slurry in an amount of 15% to 37.5% by weight, such as 17.5% to 35% by weight, preferably 20% to 30% by weight.

Water is added to the slurry in an amount of 50% to 70% by weight of the slurry. The water content in the slurry should be 50% by weight of the slurry or more, because the spent grain absorb water and a certain amount of water then is necessary in order to be able to make a slurry that can be stirred during fermentation. On the contrary, the water content should not be above 70% by weight of the slurry, because then the following drying step will take too long time. Hence, the water content in the slurry should be just enough to be able to stir the slurry and not more.

In a preferred embodiment of the invention, the water content in the slurry is in ana amount of from 55% to 65% by weight.

The method of the present invention furthermore provides one or more acid producing bacteria and one or more yeast to the slurry.

The acid producing bacteria and yeasts may be naturally occurring in the slurry from the ingredients therein or it may be from the environment. However, in a preferred embodiment of the present invention, a starter culture comprising acid producing bacteria and yeast is added to the slurry in order to boost the fermentation.

For example, the dried and milled spent grains comprises naturally occurring acid producing bacteria in an amount of at least 8000 CFU per gram spent grain, such as at least 9000 CFU per gram spent grain.

the one or more acid producing bacteria is/are selected from the group consisting of *Lactobacillus, Streptococcus, Lactococcus, Leuconostoc, Pediococcus, Acetobacter, Thiobacillus* and *Bifidobacteria.*

Preferably, the one or more acid producing bacteria is/are selected from the group consisting of *Lactobacillus, Streptococcus, Lactococcus, and Bifidobacteria.* Most preferably, the one or more acid producing bacteria is a species from the genus of *Lactobacillus.* The strain of the acid producing bacteria may be any of the strains earlier mentioned under the description of the dry sourdough composition.

The yeast used is preferably selected from the group consisting of *Saccharomyces, Candida, Kazachstania, Naumovozyma, Pichia* and *Wickerhamomyces.*

The one or more yeast used may be any of the earlier mentioned strains.

In step b) of the method of the present invention is the slurry obtained in step a) fermented for at least 5 hours. The fermentation is carried out until an acceptable sour taste is obtained. For example, the fermentation may be for at least 8 hours, such as at least 12 hours.

In an embodiment of the present invention, the fermentation in step b) is for 5 hours to 48 hours, preferably for 8 hours to 40 hours. In a further embodiment the fermentation is for 12-36 hours.

Typically, the temperature during fermentation in step b) is from 10°C to 40°C. At a temperature below 10°C, the fermentation becomes very slow, and therefore the temperature should be at 10°C or more. On the contrary, the temperature should not be above 40°C because at higher temperatures the bacteria and yeast becomes inactivated. Preferably, the temperature during fermentation is 15°C to 35°C, more preferably, the temperature is from 18°C to 28°C.

In a particular embodiment of the present invention, the fermentation in step b) is carried out for 12 hours to 36 hours at a temperature for 18°C to 28°C.

The fermentation is a spontaneous fermentation that occurs in the slurry when the right conditions are fulfilled, such as moisture content, temperature and acidity. The fermentation I spontaneous occurring based on the acid producing bacteria and yeast naturally occurring in the slurry. However, in an embodiment of the invention, further acid producing bacteria and/or yeast is added to the slurry to speed up the fermentation process.

In step c) of the present invention, the fermented slurry is dried until the obtained dry sourdough composition has a moisture content in the range of 3% to 11% by weight, preferably a moisture content in the range of 5% to 10% by weight.

The drying step may be made with any drying equipment known in the art and the type of drying is not essential for the present invention.

However, the drying may for example be by using any of spray drying, drum drying, freeze drying, fluid-bed drying or infrared drying, and oven drying. Preferably, drum drying or spray drying is used for drying the dry sourdough composition.

Drying in an oven is typically at a temperature of 40°C to 55°C for 6 to 12 hours, such as 45°C to 50°C for 6 to 12 hours. The drying time is dependent on the moisture content in the fermented slurry and the type of drying equipment used. However, drying using other types of drying equipment may be for a much shorter time dependent on the drying equipment.

In an embodiment of the present invention, the obtained dried and fermented sourdough composition may be subjected to particulation to obtain a particle size of 400 µm or below. Particulation may not be necessary because in some instances the dry sour dough composition will after the drying step have the desired particle size.

Particulation of the dry sourdough composition should preferably be to a particle size of 300µm or below and more preferably 200µm or below.

For example, the particulation of the dry sourdough composition should be to a particle size in the range of 75µm to 400µm, such as 100µm to 300µm.

In a further embodiment, the method of the present invention comprises addition of a food grade acid to the slurry in step a).

The addition of a food grade acid to the slurry increases and speed up the fermentation and hence flavour development, because the food grade acid improves the environment of the bacteria to grow. In addition, the food grade acid may decrease the activity of unwanted bacteria and hence work as a preservative of the dry sourdough composition.

In an example of the present invention, the added food grade acid is selected grom the group consisting of citric acid, lactic acid, acetic acid, malic acid, glucono-delta-lactone, tartaric acid, fumaric acid, gluconic acid.

The method of the present invention comprises in an embodiment of the invention continuous mixing of the slurry during fermentation in step b) with a mixing rate in the range of from 5 to 25 rpm during. The continuous mixing is to aerate the slurry and hence make optimal conditions for the bacteria and yeast. Further, the mixing during step b) is to avoid drying of the surface of the slurry and therefore to avoid possible growing of mould on the surface. The continuous mixing during fermentation is preferably with a mixing speed in the range of 7 to 12 rpm.

It should be noted that embodiments and features described in the context of one of the aspects of the present invention also apply to the other aspects of the invention.

The invention will now be described in further details in the following non-limiting examples.

### Examples

### Example 1: Method of making the sour dough composition

Example 1 discloses a method of making the dry sourdough composition according to the present invention comprising brewer's spent grain as the source of spent grain.

500 g of brewer's spent grain was mixed with 500 g wheat flour and 1000g water to form a homogeneous slurry.

The mixture was subjected to a controlled fermentation process, where the mixture is allowed to ferment for a period of 24 hours at a temperature of 25°C. During this time, lactic acid bacteria and yeast that was naturally occurring in the mixture work together, ferment the mixture, and develop a distinctive sour aroma and taste.

During fermentation, the slurry was continuous mixed at a low speed (about 10-12 rpm) to ensure aeration of the mixture and improve the fermentation.

After fermentation, the slurry was dried at 48°C using a fan to ensure uniform and efficient drying. The drying was approximately for 6-12 hours. Afterwards, the dried fermented mixture was milled into a fine powder with a particle size below 200µm.

The obtained dried and milled mixture is the dry sourdough composition according to the present invention that can be added as ingredient when making various baking products. The characteristic tanginess and aroma of fermented sourdough is then brough to each baking product by incorporation into the recipes of making baked products while the dry sourdough composition remained easy to store.

In this example, the fermented sourdough was dried by spreading the fermented mixture onto a baking tray covered with baking paper. The fermented mixture was then dried in an oven with fan at 48°C while a gap in the oven door was kept open, so that humid air could escape.

The moisture content in the dry sourdough obtained was measured during the drying process and the drying was stopped when the moisture content was in the range of 3 to 10% by weight.

The drying was for 6-12 hours depending on the number of trays in the oven and the water content in the fermented mixture.

### Example 2: Measuring flavour development by TTA

Example 2 discloses measuring of flavour development of dry sourdough compositions after the fermentation process. Flavour development is measured using the method Total Titratable Acidity (TTA) that is a measure of the total amount of acid present in a substrate. TTA is used as an indication of flavour development. The higher the TTA, the more flavour is developed. The pH is also measured, but pH is not optimal for measuring acidity changes of dry sourdough compositions as changes in weak organic acids like lactic acid and acetic acid cannot be detected by using pH measurement (because of high sensitivity).

In this example, the TTA was measured by mixing 10 gram of dry sourdough composition made according to example 1 in 100 ml distilled water in a 400 ml beaker. The beaker was placed onto a magnetic stirrer with a magnetic bar, which agitated the mixture until the sample was homogenised. The sample of dry sourdough composition in water were agitated for 5 minutes before start of titration. Further, a pH electrode was placed into the beaker and the pH was continuously monitored. TTA was calculated by manual titration of 0.1M NaOH in a 25ml burette until pH stabilised at 8.5 during the last minute of stirring. The amount of NaOH used to adjust to pH 8.5 is then used to calculate the TTA. Samples was made of dry sourdough composition made from 3 different types of brewer's spent grains, i.e. the following sourdough compositions mentioned 01, 02 and 03.:
**01** - fermented wheat flour and fermented upcycled barley malt as the spent grains
**02-** fermented wheat flour, fermented upcycled barley malt, and
   upcycled wheat malt as the spent grains
**03** - fermented wheat flour, fermented upcycled barley malt,
   upcycled wheat malt, upcycled rye malt and upcycled oat malt as the spent grains

Further, samples were made with different amounts of dry sourdough composition (10%, 20%, 40%) and wheat flour (90%, 80%, 60%).

A sample was also made on 100% fermented wheat flour.

The results are shown in Table 1 below:

**Table 1: TTA measured on different samples of dry sourdough composition.**

| Sample No. | Type of dry sourdough composition | Amount of spent grains in the dry sourdough composition | Amount of wheat flour in the dry sourdough composition | Start pH | TTA |
|---|---|---|---|---|---|
| Sample 1 | 01 | 10% | 90% | 4.19 | 9.22 |
| Sample 2 | 01 | 20% | 80% | 4.03 | 13.1 |
| Sample 3 | 01 | 40% | 60% | 4.05 | 12.39 |
| Sample 4 | 02 | 10% | 90% | 4.17 | 8.19 |
| Sample 5 | 02 | 20% | 80% | 3.99 | 10.6 |
| Sample 6 | 02 | 40% | 60% | 3.97 | 11.59 |
| Sample 7 | 03 | 10% | 90% | 3.96 | 10.95 |
| Sample 8 | 03 | 20% | 80% | 3.93 | 12.27 |
| Sample 9 | 03 | 40% | 60% | 3.91 | 12.66 |
| Sample 10 | - | | 100% | 3.77 | 10.79 |

Table 1 shows that the higher percentage of spent grain in the dry sourdough composition, the higher is the TTA in most of the samples. Hence, the aroma of sourdough is increased when the amount of spent grain in the dry sourdough composition is increased.

Further, table 1 shows that when the amount of spent grains in the dry sourdough composition is 10%, the TTA (acidity) is lower than fermented wheat (100%). However, when the amount of spent grains in the dry sourdough composition is 20% and 40%, the TTA is higher than the TTA of the 100% fermented wheat flour for most samples (for most samples of dry sourdough composition).

### Example 3: Analysis of baking performance

In example 3, the baking performance of the dry sourdough composition was analysed. It was analysed whether there was a difference of baking performance dependent on the amount of spent grain in the dry sourdough composition.

4 samples of dry sourdough composition using type 03 spent grains was made having different amounts of the spent grains, see samples 11-14 below:
Sample 11: dry sourdough composition comprising 10% spent grains and 90% wheat flour
Sample 12: dry sourdough composition comprising 20% spent grains and 80% wheat flour
Sample 13: dry sourdough composition comprising 40% spent grains and 60% wheat flour
Sample 14: dry sourdough composition comprising 60% spent grains and 40% wheat flour

### Percentages are weight percentages.

For analysing the baking performance, the recipe for making a bread was as disclosed in table 2, and the difference in the four breads made was the amount of spent grains and wheat flour in the dry sourdough composition as disclosed above.

**Table 2: Recipe for making bread**

| | Amount in percentage | Amount in gram |
|---|---|---|
| Wheat flour | 42.06% | 225 |
| BSG, non fermented | 4.67% | 25 |
| Yeast | 0.93% | 5 |
| Salt | 0.93% | 5 |
| Water | 46.73% | 250 |
| Dry sourdough composition | 4.67% | 25 |
| | 100% | 535 gram |

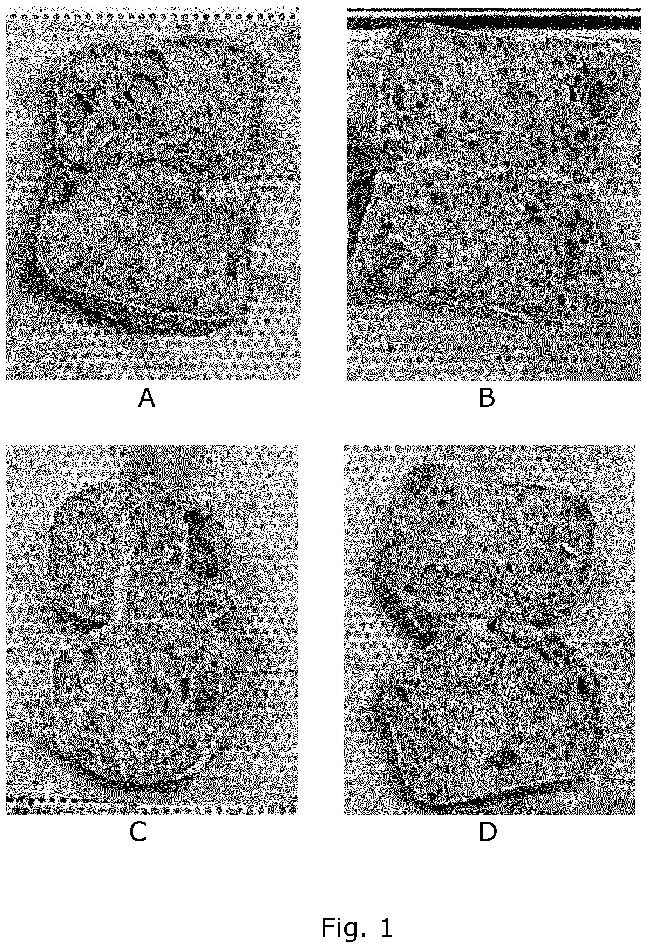

The baked breads are shown in figure 1A-D, where figure 1A is a bread made with sample 11, figure 1B is a bread made with sample 12, figure 1C is a bread made with sample 13 and figure 1D is a bread made with sample 14.

Visual and sensory evaluations of the 4 breads made were conducted by a trained test panel of 6 persons.

The sensory evaluation revealed that the four breads all had similar texture and colour, and there was not observed any noticeable differences in the breads with different amount of spent grain in the dry sourdough composition. The texture of the breads was soft, light and had a good air incorporation, i.e. was not dense.

### Example 4: Analysis of the amount of dry sourdough composition to use in baking products

Using the results from both the analysis of TTA and the analysis on baking performance, the following example was made with a dry sourdough composition comprising 50%-wt spent grains (type 03) and 50%-wt wheat flour. This dry sourdough composition has an improved aroma, according to the TTA analysis, and includes much fiber into the final baked product without compromising the texture.

Three recipes for making a baked bread with different amount of dry sourdough composition (2.56%. 5.0%, 11.63%) were made and are as shown in table 3 below:

**Table 3: Different recipes of making baked bread with different amounts of dry sourdough composition.**

| | Dough 1 (%) | Dough 1 (gram) | Dough 2 (%) | Dough 2 (gram) | Dough 3 (%) | Dough 3 (gram) |
|---|---|---|---|---|---|---|
| Wheat flour | 44.87% | 350 | 43.75 | 350 | 40.70 | 350 |
| BSG-non fermented | 6.41 | 50 | 6.25 | 50 | 5.81 | 50 |
| Yeast | 0.64 | 5 | 0.63 | 5 | 0.58 | 5 |
| Salt | 0.64 | 5 | 0.63 | 5 | 0.58 | 5 |
| Water | 44.87 | 350 | 43.75 | 350 | 40.70 | 350 |
| Dry sourdough composition | 2.56 | 20 | 5.0 | 40 | 11.63 | 100 |
| Total | 100% | 780 | 100% | 800 | 100% | 860 |

The baked bread with the three different amounts of dry sourdough composition were analysed for aroma and texture.

The results revealed that the higher percentage of dry sourdough yielded notable better results. For example, the bread with 11.63% dry sourdough composition showed the most desired qualities and showed improved flavour and texture as compared to the breads having a lower amount of the dry sourdough composition included.

Additionally, it was observed that the acidity level of the bread increased with the higher content of dry sourdough composition, providing a more pronounced tangy flavour that enhanced the overall taste profile.

Hence, the results show that incorporation of a higher percentage of the dry sourdough composition in making a baked product (here bread) not only improves the bread's sensory profile but also contributes to a more distinct aroma, aligning with consumer preferences for authentic sourdough attributes in baked goods.

In addition, the inclusion of dry sourdough composition allows for an inclusion of more spent grain in the final product and hence increasing the fiber content in the final product, and this is without degrading the texture of the product.

### Example 5: Analysis of sensory evaluation of three different types of dry sourdough compositions

Bread made with the three different types of dry sourdough composition as mentioned in example 2 (type 01, 02, 03) were analysed for the sensory aroma profile.

Bread was made using the recipe of dough 2 in example 4, i.e. with the use of 5.0% dry sourdough composition.

A sensory evaluation was made with 9 trained persons was evaluating the three different breads.

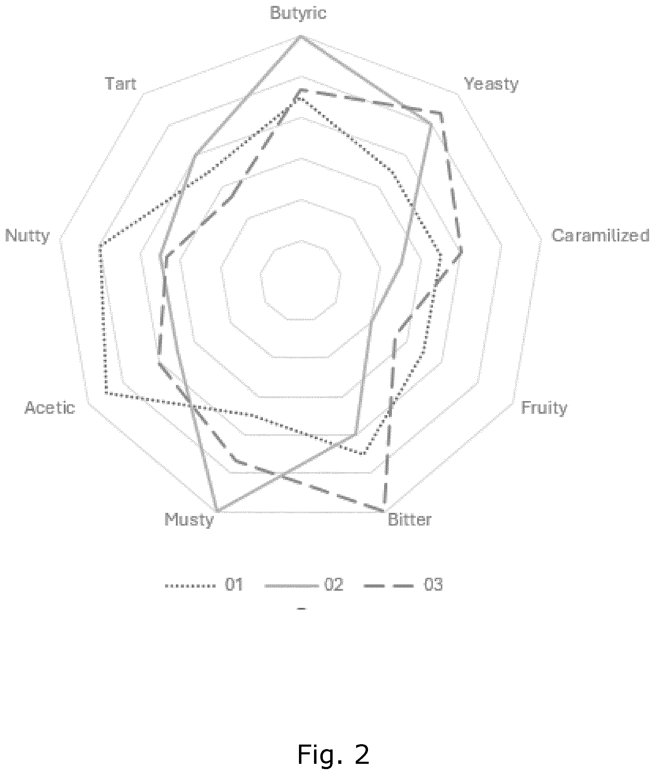

The sensory profile of the three different types of dry sourdough composition is shown in figure 2.

The results showed that each type of the dry sourdough composition was perceived to have a unique, distinct aroma and therefore giving different applications for baked products.
- **Bread 1** with the dry sourdough composition 01 was noted for its nutty, fruity, and acetic profile, contributing to a mild tangy flavour and warmth.
- **Bread 2** with the dry sourdough composition 02 was described as having a musty and butyric profile, and also had a mor umami-forward flavour perception.
- **Bread 3** was recognised for its caramelised and bitter notes, which align with malt varieties that are more heavily roasted, providing a deeper, richer flavour.

## Claims

1. A dry sourdough composition having a moisture content in the range of from 3% to 11% by weight, and comprising:
i) dried and milled spent grain in an amount in the range of 15% to 75% by weight;
ii) wheat flour in an amount in the range of 25% to 85% by weight;
iii) one or more acid producing bacteria(s)
iv) one or more yeast(s)

2. The dry sourdough composition according to claim 1, wherein the source of spent grain is selected from the group consisting of malted and unmalted spent barley, spent oat, spent rye, spent wheat, spent spelt, spent sorghum, spent buckwheat, spent corn, and spent rice. The spent grain may be any of the mentioned ones alone or in combination.

3. The dry sourdough composition according to any of claims 1 to 2, wherein the one or more acid producing bacteria is/are selected from the group consisting of *Lactobacillus, Streptococcus, Lactococcus, Leuconostoc, Pediococcus, Acetobacter, Thiobacillus* and *Bifidobacteria.*

4. The dry sourdough composition according to any of the claims 1 to 3, wherein the one or more yeast(s) is/are selected from the group consisting of *Saccharomyces, Candida, Kazachstania, Naumovozyma, Pichia* and *Wickerhamomyces.*

5. The dry sourdough composition according to any of claims 1 to 4, wherein the yeast is wild yeast derived on the spent grains and environment or as a starter culture.

6. The dry sourdough composition according to any of the claims 1 to 5, wherein the dry sourdough composition further comprises an added food grade acid.

7. The dry sourdough composition according to any of claims 1 to 6, wherein the dry sourdough composition comprises acid producing bacteria and yeasts in an amount of 10⁵-10¹⁰ CFU per gram of the dry sourdough composition.

8. The dry sourdough composition according to any of the claims 1 to 7, wherein the dry sourdough composition has a particle size below 400 µm.

9. Use of the dry sourdough composition according to any of the claims 1 to 8 in baked products selected from the group consisting of baked bread, soft rolls, sweet buns, pasta, pastry, crackers, bread sticks, cookies, biscuits, scones, pancakes, waffles, and muffins.

10. Use of the dry sourdough composition according to claim 9, wherein the bread is selected from the group of wheat bread, rye bread, specialty bread, gluten free bread, sandwich bread, and pizza flatbread, such as pita and focaccia.

11. A method of producing a dry sourdough composition comprising
a) mixing the following ingredients into a slurry:
i) dried and milled spent grain in an amount in the range of 7.5% to 37.5% by weight of the slurry,
ii) wheat flour in an amount in the range of 12.5% to 42.5% by weight of the slurry,
iii) one or more acid producing bacteria and one or more yeasts,
iv) water in an amount of 50% to 70% by weight of the slurry, and
b) fermenting the slurry for at least 5 hours to obtain a fermented slurry,
c) drying the fermented slurry until the obtained dry sourdough composition has a moisture content in the range of 3% to 11% by weight.

12. The method according to claim 11, wherein the temperature during fermentation in step b) is from 10°C to 40°C.

13. The method according to any of the claims 11 or 12, wherein the method further comprises particulation of the dried fermented sourdough composition of step c) to a particle size of 400 µm or below.

14. The method according to any of the claims 11 to 13, wherein the dried and milled spent grains comprises naturally occurring acid producing bacteria in an amount of at least 8000 CFU.

15. The method according to any of the claims 11 to 14, wherein the slurry during fermentation in step b) is subjected to continuous mixing with a mixing rate in the range of from 5 to 25 rpm.
